# EUROPÄISCHE PATENTSCHRIFT

(11) **EP 0 627 382 B1**
(45) Veröffentlichungstag und Bekanntmachung des Hinweises auf die Patenterteilung: **11.11.1998**
(21) Anmeldenummer: 94106298.6
(22) Anmeldetag: 22.04.1994
(51) Int. Cl.: C01B 21/082, C08K 3/28, C09C 1/00, C09D 17/00

(54) **Oxonitride der Formel LnTaON2 mit erhöhter Farbbrillanz, Verfahren zu deren Herstellung und deren Verwendung**
Oxynitride of the formula LnTaON2 with improved brilliancy, process for the preparation thereof and application thereof
Oxynitrure de formule LnTaON2 avec un brillance augmentée, procédé pour sa préparation et utilisation

(30) Priorität: 26.05.1993 DE 4317421
(43) Veröffentlichungstag der Anmeldung: 07.12.1994
(73) Patentinhaber: CERDEC AKTIENGESELLSCHAFT KERAMISCHE FARBEN, D-60327 Frankfurt (DE)
(72) Erfinder: Jansen, Martin, Prof., D-53127 Bonn (DE); Letschert, Hans-Peter, D-53111 Bonn (DE); Speer, Dietrich, Dr., D-63457 Hanau (DE)

(56) Entgegenhaltungen:
- FR-A- 2 573 060
- CHEMICAL ABSTRACTS, vol. 117, no. 4, 27. Juli 1992, Columbus, Ohio, US; abstract no. 38907y, Seite 874 ; & ANN. CHIM. (PARIS), Bd.16, Nr.7, 1991 Seiten 553 - 560 R. MARCHAND ET AL.

## Beschreibung

Die Erfindung richtet sich auf ein Verfahren zur Herstellung von Oxonitriden mit Perowskitstruktur der allgemeinen Formel LnTaON₂, worin Ln für ein Seltenerdelement steht, durch mehrstündiges Glühen eines eine Tantal(V)verbindung und eine Seltenerdmetallverbindung enthaltendes pulverförmiges Gemisch in ammoniakhaltiger reduzierender Atmosphäre. Durch das erfindungsgemäße Verfahren sind gegenüber dem gattungsgemäßen vorbekannten Verfahren Oxonitride mit erhöhter Farbbrillanz erhältlich; demgemäß betrifft die Erfindung auch durch das Verfahren erhältliche farbbrillantere Oxonitride der Formel LaTaON₂. Die Erfindung richtet sich schließlich auch auf die Verwendung der verfahrensgemäß erhältlichen Oxonitride als gelborange bis rotbraune Farbpigmente mit erhöhter Farbbrillanz.

Farbkörper und Pigmente unterliegen je nach Anwendungsart und Gebrauch der damit eingefärbten Partikel unterschiedlichsten Beeinträchtigungen. Durch saure oder alkalische Lösungen können beispielsweise aus nickel-, kobalt-, zink- oder chromhaltigen Spinellen oder aus Cadmiumsulfid-Gelb oder Cadmiumsulfoselenid-Rot beziehungsweise -Orange toxikologisch bedenkliche Bestandteile freigesetzt werden. Ein weiteres Problem ist die Freisetzung toxikologisch bedenklicher Schwermetalle aus derartigen Pigmenten bei der Verbrennung damit eingefärbter Kunststoffe in Müllverbrennungsanlagen. Es besteht somit ein besonderes Interesse, die Palette an gelborangen bis rotbraunen anorganischen Pigmenten, welche toxikologisch weniger bedenkliche Bestandteile enthalten, zu erweitern.

In der DE-A 42 34 938 wird ein Verfahren zur Herstellung von Tantal(V)nitrid durch Nitridierung einer oxidischen Tantal(V)verbindung mit trockenem Ammoniak bei 750 bis 950 °C sowie die Verwendung des erhaltenen roten Tantal(V)nitrids als Farbpigment zur Einfärbung von Kunststoffen und Lacken gelehrt. Tantal wird in toxikologischer Hinsicht als unbedenklich angesehen.

Aus der FR-A 2 573 060 sind Nitride und Oxonitride der allgemeinen Formel ABO₃₋ₙNₙ bekannt, welche eine Perowskitstruktur aufweisen. Unter die allgemeine Formel fallen auch Oxonitride, in welchen A für ein Seltenerdelement, B für Tantal und n für die Zahl 2 steht. Hergestellt werden derartige Verbindungen durch Glühen eines Pulvergemischs aus einem Oxid, Oxonitrid oder Nitrid des Elements A und einem Oxid, Oxonitrid oder Nitrid des Elements B in einer Stickstoff- beziehungsweise Ammoniakatmosphäre. Ausgehend von den Oxiden des Elements A und des Elements B werden als Glühdauer 48 Stunden, als Glühtemperatur etwa 1000 °C und als nitridierendes reduzierendes Gas Ammoniak angegeben. Als Verwendungszweck werden in diesem Dokument nur dielektrische Materialien angegeben. Hinweise auf die Farbe einzelner Oxonitride und deren Verwendbarkeit als Farbpigment lassen sich diesem Dokument nicht entnehmen.

Es wurde bei der Nacharbeitung des vorstehend gewürdigten vorbekannten Verfahrens festgestellt, daß die so hergestellten Oxonitride der allgemeinen Formel LnTaON₂ im wesentlichen braune Farbtöne aufweisen, welche aber wenig brillant und somit coloristisch nicht attraktiv sind. Nachteilig an dem vorbekannten Verfahren erwiesen sich zudem die lange Reaktionszeit, die hohe Temperatur und hohe Strömungsgeschwindigkeit des als Nitridierungsagens wirkenden Ammoniaks.

In Ann. Chim. (Paris) 16, Nr. 7 (1991) 553-560 beschreiben Marchand et al. neue Oxonitride mit Perowskitstruktur mit der Formel ABON₂, worin A ein Lanthanidenelement (Ln) und B Tantal oder Niob ist. Die Herstellung erfolgt durch Umsetzung eines binären Oxids der Formel ABO₄ mit Ammoniak bei 950 °C innerhalb von 24 h. Die Herstellung des binären Oxids erfolgt durch Feststoffreaktion aus den Oxiden Ln₂O₃ und Ta₂O₅ beziehungsweise Nb₂O₅ bei 1400 bis 1500 °C. Eine direkte Nitridierung eines Gemischs der Oxide führt nicht zum gewünschten Oxonitrid der Formel ABON₂.

Aufgabe der vorliegenden Erfindung ist somit, Oxonitride mit Perowskitstruktur der allgemeinen Formel LnTaON₂, worin Ln für ein Seltenerdelement steht, zur Verfügung zu stellen, welche gegenüber den vorbekannten Produkten eine erhöhte Farbbrillanz aufweisen. Eine weitere Aufgabe richtet sich darauf, das vorbekannte Verfahren dahingehend zu verbessern, daß die gewünschten farbbrillanteren Oxonitride erhältlich sind. Weitere Aspekte der erstrebten Verfahrensverbesserung richten sich auf eine Verkürzung der erforderlichen Reaktionsdauer. Schließlich richtet sich eine weitere Aufgabe der Erfindung auf das Aufzeigen einer neuen Verwendung der Oxonitride.

Gefunden wurde ein Verfahren zur Herstellung von Oxonitriden mit Perowskitstruktur der allgemeinen Formel LnTaON₂, worin Ln für ein Seltenerdelement steht, mit erhöhter Farbbrillanz durch mehrstündiges Glühen eines pulverförmigen Gemischs, enthaltend (a) eine Tantal(V)verbindung aus der Reihe Ta(V)oxid, Ta(V)oxidhydrate oder Ta(V)oxonitride und (b) eine Seltenerdmetallverbindung aus der Reihe Oxid, Oxidhydrat, Hydroxid, Carbonat, Nitrat oder Carboxylat einer C₁-bis C₄-Mono- oder Dicarbonsäure, in ammoniakhaltiger reduzierender Atmosphäre, das dadurch gekennzeichnet ist, daß das zu glühende Gemisch zusätzlich mindestens einen Mineralisator aus der Reihe der Alkali- oder Erdalkalihalogenide, Na₃AlF₆, Na₂SiF₆, AlF₃ oder der Ammoniumsalze der Kohlensäure oder einer Mono- oder Dicarbonsäure mit 1 bis 4 C-Atomen in einer Menge von 0,1 bis 10 Gewichtsteilen pro Gewichtsteile des Gemischs aus der Ta- und Ln-Verbindung enthält und, sofern erforderlich, der/die Mineralisatoren durch eine Naßbehandlung aus dem geglühten Reaktionsgemisch entfernt werden.

Die Unteransprüche richten sich auf bevorzugte Ausführungsformen des Verfahrens.

Die nach dem erfindungsgemäßen Verfahren erhältlichen Oxonitride der allgemeinen Formel LnTaON₂ weisen eine gelborange bis rotbraune Farbe auf. Die Absorptionskante der UV-Spektren der erfindungsgemäßen Oxonitride ist gegenüber derjenigen der vorbekannten Oxonitride zu längeren Wellenlängen hin verschoben. Gegenüber den erfindungsgemäß erhältlichen Oxonitriden mit erhöhter Farbbrillanz wirken die nach dem vorbekannten Verfahren hergestellten Oxonitride gleicher chemischer Zusammensetzung stets wesentlich matter und brauner. Die erhöhte Brillanz erfindungsgemäßer Oxonitride im Vergleich zu nach vorbekannten Verfahren erhältlicher Oxonitride ergibt sich aus den L*a*b*-Farbwerten im CIE-Lab-System. Es wird vermutet, daß die höhere Farbbrillanz der erfindungsgemaßen Oxonitride das Ergebnis der durch das erfindungsgemäße Verfahren ermöglichten vollständigeren Umsetzung und damit höheren Phasenreinheit, einer verfahrensbedingt erhaltenen höheren Kornfeinheit und engeren Kornspektrums ist.

Bei den bevorzugten erfindungsgemäß erhältlichen Oxonitriden handelt es sich um die Verbindungen des Yttriums, Lanthans, Cers, Praseodyms, Neodyms, Samariums, Europiums und Gadoliniums. Besonders bevorzugt sind LaTaON₂, PrTaON₂ und GdTaON₂; bei den ersten beiden Verbindungen handelt es sich um schöne rotbraune Farbtöne, wohingegen GdTaON₂ leuchtend orange ist. Die Absorptionspektren der genannten Verbindungen im Vergleich zu den nach dem vorbekannten Verfahren hergestellten Oxonitriden sind in Figur 1 bis 3 dargestellt: Figur 1 zeigt die Absorptionsspektren von nach dem vorbekannten (VB 1) sowie dem erfindungsgemäßen (B 1) Verfahren hergestellten LaTaON₂; Figur 2 zeigt die Absorptionsspektren von nach dem vorbekannten (VB 2) und dem erfindungsgemäßen (B 2) Verfahren hergestellten PrTaON₂; Figur 3 zeigt das Absorptionsspektrum von erfindungsgemäß hergestelltem GdTaON₂.

Bei der Herstellung der erfindungsgemäßen Oxonitride enthält das zu glühende Gemisch als Tantal(V)verbindung das Oxid Ta₂O₅, ein Tantal(V)oxidhydrat der Formel Ta₂O₅·aq, wobei aq Hydratwasser bedeutet und die Menge aq 14 bis 17 % Gew.-%, bezogen auf Ta₂O₅·aq, beträgt oder ein Tantal(V)oxonitrid, wie insbesondere TaON.

Bevorzugt werden Ta₂O₅ und Ta₂O₅·aq (der zuvor genannte Hydratgehalt von 14 bis 17 Gew.-% entspricht einem Tetra-bis-Pentahydrat). Ein vorteilhaft verwendbares röntgenamorphes Ta₂O₅·aq mit einem Restwassergehalt von etwa 16 Gew.-%, bestimmt durch Glühen bis 1000 °C, läßt sich dadurch herstellen, daß Tantal(V)chlorid in konzentrierter Salzlösung gelöst und Ta₂O₅·aq nach Verdünnen mit Wasser und Zugabe von Ammoniaklösung bei pH 7 gefällt und das ausgefällte Produkt gewaschen und getrocknet wird.

Als Seltenerdmetallverbindung lassen sich außer dem Oxid auch Oxidvorstufen, d. h. Verbindungen, welche während des Aufheizens auf Glühtemperatur in das Oxid der Formel Ln₂O₃ überführt werden, verwenden. Besonders bevorzugt werden das Oxid, ein Oxidhydrat oder das Hydroxid eines Seltenerdelements mit der Ordnungszahl 39, 57 bis 60 sowie 62 bis 71 verwendet. Unter den Seltenerdelementen werden jene mit der Ordnungszahl 57 bis 60 sowie 62 bis 64 bevorzugt, insbesondere jedoch Lanthan, Praseodym und Gadolinium. Obgleich es vorteilhaft ist, die Seltenerdmetallverbindung in möglichst reiner Form zu verwenden, lassen sich auch solche Verbindungen einsetzen, welche mehr als ein Seltenerdelement enthalten.

Die Tantal(V)verbindung und die Ln-Verbindung sind in dem zu glühenden Gemisch im wesentlichen in einem solchen stöchiometrischen Verhältnis enthalten, daß daraus ein Atomverhältnis von Tantal zu Lanthan beziehungsweise Lanthanidenelement von etwa 1 zu 1 resultiert. Sofern beispielsweise Ta₂O₅ und La₂O₃ als Rohstoffe verwendet werden, werden diese in äquimolarem Verhältnis eingesetzt.

Erfindungswesentlicher Bestandteil des zu glühenden Gemischs ist ein Mineralisator, wobei es sich hierbei um einen einzelnen Stoff oder um ein Stoffgemisch handeln kann. Unter den als Mineralisator wirksamen Alkali- und Erdalkalihalogeniden werden solche bevorzugt, welche einen Schmelzpunkt unter 1000 °C aufweisen. Die Halogenide der Alkalimetalle Lithium, Natrium und Kalium, insbesondere das jeweilige Fluorid und Chlorid, sind besonders wirksam. Wegen ihres niedrigeren Schmelzpunktes sind die Chloride von Magnesium und Calcium gegenüber den Fluoriden von Magnesium und Calcium bevorzugt.

Bei einer weiteren Klasse von Mineralisatoren handelt es sich um Ammoniumsalze der Kohlensäure oder einer Mono- oder Dicarbonsäure mit 1 bis 4 C-Atomen; bevorzugt sind hierbei Ammoniumcarbonat, Ammoniumbicarbonat, Ammoniumacetat und Ammoniumoxalat.

Es wird vermutet, daß die Wirkung der Mineralisatoren auf der Basis der Halogenide einerseits und der Ammoniumsalze andererseits auf unterschiedlichen, bisher nicht näher untersuchten Prinzipien beruht. Es erscheint möglich, daß das Ammoniumsalz, obgleich dieses unterhalb der eigentlichen Reaktionstemperatur zersetzt oder sublimiert wird, eine erste Nitridierung bewirkt. Im Falle der Halogenid-Mineralisatoren könnte die Ausbildung der Perowskitstruktur durch die flüssige Mineralisatorphase begünstigt werden.

Die eingesetzte Mineralisatormenge kann in einem weiten Bereich liegen, nämlich zwischen 0,1 und 10 Gewichtsteilen pro Gewichtsteil des Gemischs aus der Ta- und Ln-Verbindung; bevorzugt wird eine Mineralisatormenge im Bereich zwischen 0,5 und 3 und insbesondere zwischen 1 und 3 Gewichtsteilen pro Gewichtsteil des Gemischs aus der Ta- und Ln-Verbindung.

Das zu glühende pulverförmige Gemisch wird zweckmäßigerweise vor dem eigentlichen Glühvorgang intensiv gemischt und homogenisiert - eine besonders gute Homogenisierung läßt sich durch Behandeln des Pulvergemischs in einer Intensivmühle, insbesondere einer Kugelmühle, bewerkstelligen. Alternativ können der oder die Mineralisatoren auch in Form einer wäßrigen Lösung oder Suspension dem Gemisch aus der Ta- und Ln-Verbindung zugeführt werden.

Der eigentliche Glühprozeß erfolgt in einem Ofen in Gegenwart einer ammoniakhaltigen reduzierenden Atmosphäre. Außer Ammoniak kann die Ofenatmosphäre auch Stickstoff und gegebenenfalls Wasserstoff enthalten. Üblicherweise besteht die Atmosphäre aus im wesentlichen 10 bis 100 Volumteilen Ammoniak und 0 bis 90 Volumteilen Stickstoff; bevorzugt wird eine Atmosphäre, welche überwiegend aus Ammoniak besteht. Die dem Ofen zugeführte reduzierende und nitridierende Atmosphäre soll möglichst frei von Wasser sein. Um die Ofenatmosphäre, etwa eine solche aus im wesentlichen Ammoniak, wenigstens teilweise rezyklieren zu können, ist es zweckmäßig, diese über einen Trockner zu leiten und anschließend zu rezyklieren.

Der Glühprozeß wird so lange betrieben, bis aus den eingesetzten Rohstoffen ein phasenreines Oxonitrid der Formel LnTaON₂ gebildet worden ist. Die Glühtemperatur liegt im allgemeinen unter jener des vorbekannten Verfahrens, also unter 1000 °C. Üblicherweise liegt die Glühtemperatur zwischen 750 und 950 °C. insbesondere zwischen 850 und 950 °C. Bei einer Glühtemperatur im Bereich von 850 bis 950 °C und einer im wesentlichen aus Ammoniak bestehenden Ofenatmosphäre beträgt die Glühdauer bei Einsatz der Ta- und Ln-Verbindung in Form eines Oxids oder eines Oxidvorproduktes 10 bis 30 Stunden.

Zum Teil werden die Mineralisatoren bereits während des Glühprozesses durch Zersetzung oder Sublimation aus dem Glühgemisch ausgetragen. Sofern dies erwünscht oder erforderlich ist, kann sich an den Glühprozeß noch eine Naßbehandlung zwecks Herauslösen anwesender Mineralisatorbestandteile anschließen. Die Nachbehandlung kann mit einem üblichen Mahlprozeß, etwa in einer Kugelmühle, kombiniert werden. Zur Naßbehandlung dienen wäßrige Lösungen, deren pH-Wert vorzugsweise neutral bis sauer ist.

Durch die erfindungsgemäße Maßnahme der Mitverwendung eines als Mineralisator bezeichneten Hilfsstoffes -Hilfsstoffe, welche Feststoffreaktion begünstigen, werden in der Fachliteratur teilweise als Mineralisatoren, teilweise auch als Flußmittel bezeichnet - ist es überraschenderweise möglich geworden, zu farbbrillanteren Oxonitriden zu gelangen.

Aufgrund der durch das erfindungsgemäße Verfahren erhältlichen hohen Farbbrillanz der hergestellten Oxonitride der allgemeinen Formel LnTaON₂ erschließt sich diesen Produkten ein neues Anwendungsgebiet, nämlich die Verwendung als Farbpigment. Der Verwendung von nach dem vorbekannten Verfahren hergestellten gattungsgemäßen Oxonitriden als Farbpigment standen bisher die in coloristischer Hinsicht wenig attraktiven brauen Farben sowie die ungenügende Farbbrillanz entgegen. Durch das erfindungsgemäße Verfahren wurde es möglich, diesem Mangel abzuhelfen, so daß nun neue temperaturstabile gelborange bis rotbraune Pigmente zur Verfügung stehen, welche keine in toxikologischer Hinsicht bedenkliche Metalle enthalten. Einsatzgebiete für die erfindungsgemäßen Oxonitride als Farbpigment sind insbesondere Kunststoffe, Lacke, Druckfarben und Tinten. Die hohe thermische Stabilität der Oxonitride erlaubt die Einfärbung der Kunststoffe in der Masse mit anschließender Extrusion bei Temperaturen von 200 bis 300 °C. Auch Einbrennlacke lassen sich wegen der thermischen Stabilität der Pigmente gut mit diesen einfärben.

Außer dem Vorteil der Herstellbarkeit farbbrillanter phasenreiner Oxonitride, welche sich als Farbpigmente eignen, zeigt das erfindungsgemäße Verfahren weitere Vorteile: Überraschenderweise konnte die Reaktionszeit gegenüber dem vorbekannten Verfahren deutlich verkürzt werden. Während im vorbekannten Verfahren eine Glühtemperatur um 1000 °C und zusätzlich eine sehr hohe Strömungsgeschwindigkeit des Nitridierungsgases (Ammoniak) über dem Pulvergemisch als notwendig erachtet wurden, gestattet es das erfindungsgemäße Verfahren, die Glühtemperatur abzusenken und zusätzlich die Strömungsgeschwindigkeit des Nitridierungsgases zu reduzieren. Damit vereinigt das erfindungsgemäße Verfahren verfahrenstechnische Vorteile, welche für eine Übertragung des Verfahrens vom Labormaßstab in den technischen Maßstab von Bedeutung sind.

Die nachfolgenden Beispiele und Vergleichsbeispiele zeigen die Überlegenheit des erfindungsgemäßen Verfahrens und der damit erhältlichen Produkte. Weitere Beispiele richten sich auf die Verwendung erfindungsgemäß hergestellter Oxonitride zur Einfärbung eines Kunststoffs.

### Vergleichsbeispiel 1

Tantal(V)oxid (Ta₂O₅) und Lanthanoxid (La₂O₃) werden im Molverhältnis 1 zu 1 gemischt und durch 30-minütiges Mahlen in einer Kugelmühle homogenisiert.

2 g der Mischung werden in einem Korundschiffchen in einem von außen beheizten Reaktionsrohr 48 Stunden bei 950 °C unter strömendem Ammoniak (15 l/h) geglüht, wobei die Umsetzung zu LaTaON₂ erfolgt.

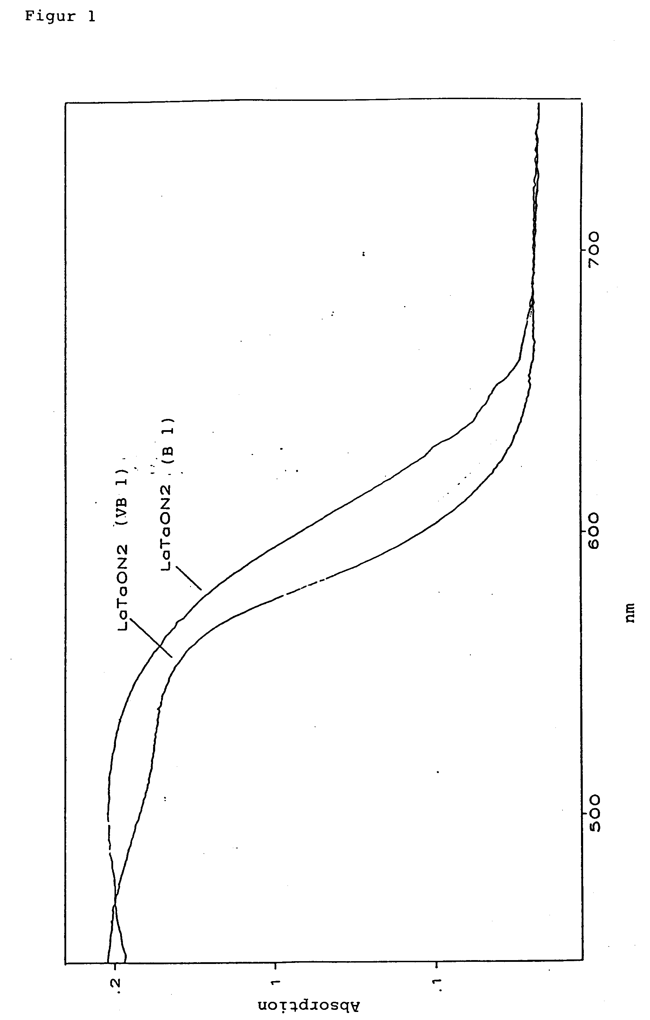

Kurve "LaTaON₂ (VB 1)" in Figur 1 zeigt das Absorptionsspektrum.

Meßparameter für die Absorptionsspektren der Figuren 1 bis 3:
- Gerät:: Cary 2400 UV-VIS-Spektrophotometer Fa. Varian, Darmstadt
- Meßbereich:: 400 bis 780 nm
- Basislinien:: Korrigierte Messungen
- Einwaage:: 60 mg Probe auf 4,5 g BaSO₄
- Ordinate:: Absorption
- Abszisse:: Wellenlänge in nm
- Scanrate:: 1 mm sec⁻¹
- Meßinterval:: 0,5 nm

### Vergleichsbeispiel 2

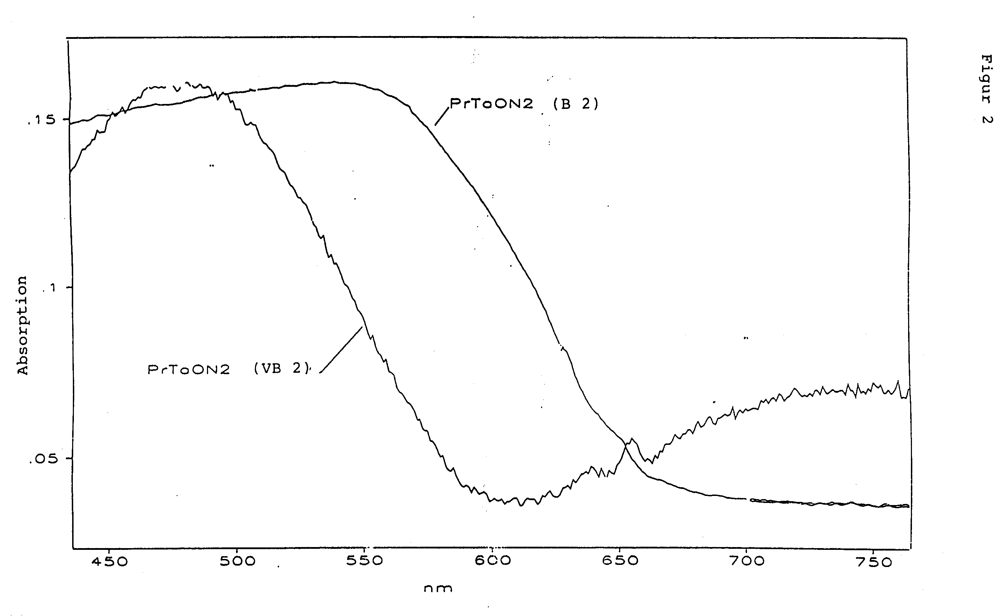

In gleicher Weise wie in Vergleichsbeispiel 1 wird ein äquimolares Pulvergemisch aus Ta₂O₅ und Praseodymoxid (Pr₂O₃) gemischt, homogenisiert und im NH₃-Strom 48 Stunden bei 950 °C geglüht. Das Absorptionsspektrum des erhaltenen PrTaON₂ zeigt Kurve "PrTaON₂ (VB 2)" der Figur 2.

### Beispiel 1

Eine äquimolare Mischung aus Ta₂O₅ und La₂O₃ wird mit der dreifachen Gewichtsmenge einer NaCl/KCl-Mischung (Gewichtsverhältnis 44/56) versetzt und die Gesamtmischung durch 30-minütiges Mahlen in einer Kugelmühle homogenisiert. Das homogenisierte Gemisch (2 g pro Korundschiffchen) wird in der in Vergleichbeispiel 1 beschriebenen Ofenvorrichtung geglüht:
- Temperatur:: 900 °C
- Dauer:: 24 h
- NH₃-Strom:: 10 l/h

Das Absorptionsspektrum des erhaltenen, gegenüber dem Produkt des Vergleichsbeispiels 1 farbbrillanteren, rotverschobenen Oxonitrids LaTaON₂ zeigt die Kurve "LaTaON₂ (B 1)" in Figur 1.

### Beispiel 2

Beispiel 1 wurde mit der einzigen Abänderung, daß anstelle La₂O₃ nun Pr₂O₃ eingesetzt wurde, wiederholt.

Das Absorptionsspektrum des gegenüber dem Produkt des Vergleichsbeispiel 2 farbbrillanteren, rotverschobenen PrTaON₂ zeigt Kurve "PrTaON₂ (B 2)" in Figur 2.

### Beispiel 3

Beispiel 1 wurde mit der einzigen Abänderung, daß anstelle La₂O₃ nun Gadoliniumoxid (Gd₂O₃) eingesetzt wurde, wiederholt.

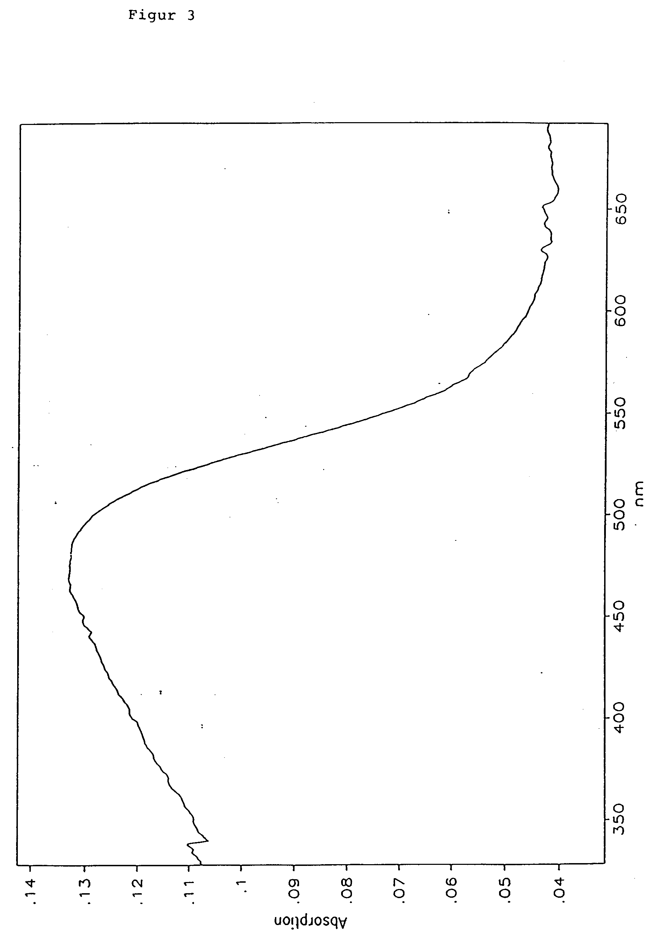

Das Absorptionsspektrum des erhaltenen farbbrillanteren orangefarbenen GdTaON₂ zeigt Figur 3.

### Beispiel 4

Die Oxonitride LaTaON₂, PrTaON₂ und GdTaON₂ der Beispiele 1 bis 3 wurden im Vollton als auch in einer Weißausmischung in PVC-Plastisol eingearbeitet und coloristisch geprüft. Für den Vollton wurden 1 g des jeweiligen Oxonitrids und 3 g Plastisol vermischt und in einer Farbausreibemaschine dispergiert.

Für die Weißausmischung wurden 0,1 g des Oxonitrids und 1 g TiO₂ vermengt und anschließend das Gemenge mit 3 g PVC-Plastisol vermischt und homogenisiert.

Mit einem Schlitten wurden aus den Pasten Aufstriche in einer Dicke von 0,5 mm hergestellt, deren Gelierung durch 10-minütiges Erhitzen auf 140 °C erfolgte. Mit einem Spektralphotometer wurden die Farbwerte L*, a* und b* im CIE-Lab-System (DIN 5033, Teil 3) gemessen:

Die Ergebnisse folgen aus der Tabelle.

| | LaTaON₂ | | PrTaON₂ | | GdTaON₂ |
|---|---|---|---|---|---|
| | Vollton | Weißausmischung | Vollton | Weißausmischung | Vollton |
| L* | 25,04 | 55,12 | 23,09 | 50,98 | 45,96 |
| a* | 23,35 | 10,84 | 22,39 | 11,99 | 20,70 |
| b* | 15,07 | 11,58 | 13,22 | 9,36 | 29,59 |

## Patentansprüche

1. Verfahren zur Herstellung von Oxonitriden mit Perowskitstruktur der allgemeinen Formel LnTaON₂, worin Ln für ein Seltenerdelement steht, mit erhöhter Farbbrillanz durch mehrstündiges Glühen eines pulverförmigen Gemischs, enthaltend (a) eine Tantal(V)verbindung aus der Reihe Ta(V)oxid, Ta(V)oxidhydrate oder Ta(V)oxonitride und (b) eine Seltenerdmetallverbindung aus der Reihe Oxid, Oxidhydrat, Hydroxid, Carbonat, Nitrat oder Carboxylat einer C₁- bis C₄-Mono- oder Dicarbonsäure, in ammoniakhaltiger reduzierender Atmosphäre,
dadurch gekennzeichnet,
daß das zu glühende Gemisch zusätzlich mindestens einen Mineralisator aus der Reihe der Alkali- oder Erdalkalihalogenide, Na₃AlF₆, Na₂SiF₆, AlF₃ oder der Ammoniumsalze der Kohlensäure oder einer Mono- oder Dicarbonsäure mit 1 bis 4 C-Atomen in einer Menge von 0,1 bis 10 Gewichtsteilen pro Gewichtsteile des Gemischs aus der Ta- und Ln-Verbindung enthält und, sofern erforderlich, der/die Mineralisatoren durch eine Naßbehandlung aus dem geglühten Reaktionsgemisch entfernt werden.

2. Verfahren nach Anspruch 1,
dadurch gekennzeichnet,
daß das zu glühende Gemisch als Tantal(V)verbindung Ta₂O₅ oder ein Ta₂O₅·aq mit einem Hydratgehalt (aq) von 14 bis 17 Gew.-% und als Ln-Verbindung ein Oxid, Oxidhydrat oder Hydroxid eines oder mehrerer Seltenerdelemente enthält.

3. Verfahren nach Anspruch 1 oder 2,
dadurch gekennzeichnet,
daß das zu glühende Gemisch als Ln-Verbindung eine Verbindung der Elemente Lanthan, Praseodym oder Gadolinium enthält.

4. Verfahren nach einem oder mehreren der Ansprüche 1 bis 3,
dadurch gekennzeichnet,
daß das zu glühende Gemisch als Mineralisator ein oder zwei Stoffe aus der Reihe der Alkalihalogenide, insbesondere des Fluorids oder Chlorids von Lithium, Natrium oder Kalium, oder der Erdalkalichloride des Magnesiums oder Calciums enthält.

5. Verfahren nach einem oder mehreren der Ansprüche 1 bis 4,
dadurch gekennzeichnet,
daß das zu glühende Gemisch einen oder mehrere Mineralisatoren in einer Gesamtmenge von 0,5 bis 3 Gewichtsteilen pro Gewicht steil des Gemischs aus der Ta- und Ln-Verbindung enthält.

6. Verfahren nach einem oder mehreren der Ansprüche 1 bis 5,
dadurch gekennzeichnet,
daß man das pulverförmige Gemisch bei 750 bis 950 °C, vorzugsweise bei 850 bis 950 °C, glüht.

7. Verfahren nach einem oder mehreren der Ansprüche 1 bis 6,
dadurch gekennzeichnet,
daß das Glühen in einer Atmosphäre aus im wesentlichen 10 bis 100 Volumteilen Ammoniak und 0 bis 90 Volumteilen Stickstoff durchgeführt wird.

8. Verfahren nach einem oder mehreren der Ansprüche 1 bis 7,
dadurch gekennzeichnet,
daß man das Pulvergemisch 10 bis 30 Stunden bei 850 bis 950 °C in einer im wesentlichen aus Ammoniak bestehenden Atmosphäre glüht.

9. Oxonitride mit Perowskitstruktur der allgemeinen Formel LnTaON₂, worin Ln für Lanthan oder ein Lanthanidenelement steht, mit erhöhter Farbbrillanz und L*a*b*-Farbwerten (CIE-Lab-System, DIN 5033, Teil 3), wie sie bei der Herstellung nach einem Verfahren gemäß einem der Ansprüche 1 bis 8 erhältlich sind.

10. Verwendung der Oxonitride gemäß Anspruch 9 als Farbpigment, insbesondere zum Einfärben von Kunststoffen und Lacken.

## Claims

1. A process for the preparation of oxynitrides with a perovskite structure corresponding to the general formula LnTaON₂, wherein Ln stands for a rare earth element, with increased brilliance by calcining for several hours a mixture in powder form containing (a) a tantalum (V) compound from the series comprising Ta (V) oxide, hydrated Ta (V) oxides or Ta (V) oxynitrides and (b) a rare earth metal compound from the series comprising oxide, hydrated oxide, hydroxide, carbonate, nitrate or carboxylate or a C₁-to C₄-mono or dicarboxylic acid, in an ammonia-containing reducing atmosphere, characterised in that the mixture to be calcined additionally contains at least one mineraliser from the series comprising alkali or alkaline earth halides, Na₃AlF₆, Na₂SiF₆, AlF₃ or ammonium salts of carbonic acid or a mono- or dicarboxylic acid with 1 to 4 carbon atoms in a quantity of 0.1 to 10 parts by weight per parts by weight of the mixture of the Ta and Ln compound and, if necessary, the mineraliser(s) are removed from the calcined reaction mixture by a wet treatment.

2. A process according to claim 1, characterised in that the tantalum (V) compound contained in the mixture to be calcined is Ta₂O₅ or a Ta₂O₅.aq with a hydrate content (aq) of 14 to 17 wt.% and the Ln compound is an oxide, hydrated oxide or hydroxide of one or more rare earth elements.

3. A process according to claim 1 or 2, characterised in that the Ln compound contained in the mixture to be calcined is a compound of the elements lanthanum, praseodymium or gadolinium.

4. A process according to one or more of claims 1 to 3, characterised in that the mineraliser contained in the mixture to be calcined is one or two substances from the series comprising alkali halides, particularly the fluoride or chloride of lithium, sodium or potassium, or the alkaline earth chlorides of magnesium or calcium.

5. A process according to one or more of claims 1 to 4, characterised in that the mixture to be calcined contains one or more mineralisers in a total quantity of 0.5 to 3 parts by weight per part by weight of the mixture of the Ta and Ln compound.

6. A process according to one or more of claims 1 to 5, characterised in that the mixture in powder form is calcined at 750 to 950°C, preferably at 850 to 950°C.

7. A process according to one or more of claims 1 to 6, characterised in that calcining is carried out in a atmosphere of substantially 10 to 100 parts by volume of ammonia and 0 to 90 parts by volume of nitrogen.

8. A process according to one or more of claims 1 to 7, characterised in that the powder mixture is calcined for 10 to 30 hours at 850 to 950°C in an atmosphere comprising substantially ammonia.

9. Oxynitrides with a perovskite structure corresponding to the general formula LnTaON₂ wherein Ln stands for lanthanum or a lanthanide element, with increased brilliance and L*a*b* colour values (CIE-Lab system, DIN 5033, part 3) of the kind obtainable during preparation according to a process in accordance with one of claims 1 to 8.

10. The use of the oxynitrides according to claim 9 as pigment, particularly for colouring plastics and lacquers.

## Revendications

1. Procédé de fabrication d'oxonitrures à structure de perowskite de formule générale LnTaON₂, dans laquelle Ln représente un élément de terre rare, à brillance augmentée par une calcination de plusieurs heures d'un mélange pulvérulent contenant (a) un composé de tantale (V) de la série oxyde de Ta(V), oxyde de Ta(V) hydraté ou oxonitrures de Ta(V) et (b) un composé de métal rare de la série oxyde, oxyde hydraté, hydroxyde, nitrate ou carboxylate d'un acide mono- ou dicarboxylique en C₁ à C₄, dans une atmosphère réductrice contenant de l'ammoniac,
caractérisé en ce que
le mélange à calciner contient en outre un agent minéralisant de la série des halogénures de métaux alcalins ou alcalino-terreux, Na₃AlF₆, Na₂SiF₆, AlF₃ ou des sels d'ammonium de l'acide carbonique ou d'un acide mono- ou dicarboxylique avec 1 à 4 atomes de carbone en une quantité de 0,1 à 10 parties en poids par partie en poids du mélange des composés de Ta et de Ln et, si nécessaire, en ce que le ou les agents minéralisants sont retirés du mélange réactionnel calciné par un traitement par voie humide.

2. Procédé selon la revendication 1,
caractérisé en ce que
le mélange à calciner contient comme composé de tantale (V) Ta₂O₅ ou un Ta₂O₅.aq avec une teneur en hydrate (aq) de 14 à 17 % en poids et comme composé de Ln un oxyde, oxyde hydraté ou hydroxyde d'un ou plusieurs éléments de terres rares.

3. Procédé selon la revendication 1 ou 2,
caractérisé en ce que
le mélange à calciner contient comme composé de Ln un composé des éléments lanthane, praséodyme ou gadolinium.

4. Procédé selon l'une ou plusieurs des revendications 1 à 3,
caractérisé en ce que
le mélange à calciner contient comme agent minéralisant un ou plusieurs corps de la série des halogénures de métaux alcalins, en particulier des fluorures ou chlorures de lithium, de sodium ou de potassium, ou des chlorures alcalino-terreux de magnésium ou de calcium.

5. Procédé selon une ou plusieurs des revendications 1 à 4,
caractérisé en ce que
le mélange à calciner contient un ou plusieurs agents minéralisants en une quantité totale de 0,5 à 3 parties en poids par partie en poids du mélange des composés de Ta et de Ln.

6. Procédé selon une ou plusieurs des revendications 1 à 5,
caractérisé en ce qu'
on calcine le mélange pulvérulent entre 750 et 950°C, de préférence entre 850 et 950°C.

7. Procédé selon une ou plusieurs des revendications 1 à 6,
caractérisé en ce qu'
on effectue la calcination dans une atmosphère constituée pour l'essentiel de 10 à 100 parties en volume d'ammoniac et de 0 à 90 parties en volume d'azote.

8. Procédé selon une ou plusieurs des revendications 1 à 7,
caractérisé en ce qu'
on calcine le mélange pulvérulent pendant 10 à 30 heures entre 850 et 950°C dans une atmosphère constituée pour l'essentiel d'ammoniac.

9. Oxonitrures à structure de perowskite de formule géné rale LnTaON₂, dans laquelle Ln représente le lanthane ou un lanthanide, à brillance et à valeurs de L*a*b* augmentées (système CIE-Lab, DIN 5033 3ème partie ), tels qu'on peut les obtenir selon un procédé conforme à l'une des revendications 1 à 8.

10. Utilisation des oxonitrures selon la revendication 9 comme pigment coloré, en particulier pour la coloration des matières plastiques et des vernis.
